# EUROPEAN PATENT SPECIFICATION

(11) **EP 4 545 421 B1**
(45) Date of publication and mention of the grant of the patent: **12.08.2026**
(21) Application number: 23205948.5
(22) Date of filing: 26.10.2023
(51) Int. Cl.: B64D 45/00, G05D 1/654, B64D 25/00, B64D 45/04

(54) **EMERGENCY SYSTEM FOR AN AIRCRAFT**
NOTFALLSYSTEM FÜR EIN FLUGZEUG
SYSTÈME D'URGENCE POUR AÉRONEF

(43) Date of publication of application: 30.04.2025
(73) Proprietor: Airbus Operations GmbH, 21129 Hamburg (DE)
(72) Inventor: Sobeck, Frederik, 21129 Hamburg (DE)
(74) Representative: Airbus Germany

(56) References cited:
- WO-A1-2020/112203
- US-A1- 2006 032 978
- US-A1- 2006 041 345
- US-A1- 2021 287 560
- US-A1- 2022 388 678

## Description

The present disclosure generally relates to an aircraft having an emergency system.

Particularly, the present disclosure relates to an aircraft having an emergency system including an emergency button outside of the cockpit to send an emergency landing signal.

A conventional aircraft is usually equipped with an autopilot system to allow controlling the aircraft during cruise. Some of the autopilot systems include functionality to perform minor climb and descend manoeuvres. In addition, some aircrafts or autopilot systems are configured to perform automated manoeuvres in case of a signal from a Traffic Collision Avoidance System (TCAS). A more advanced control of the aircraft may even allow an automated landing of the aircraft including Air Traffic Control communication, for example, if the pilot/s is/are unable to continue the flight.

Furthermore, US 2022/388678 A1 relates to a system to detect an unauthorised user in a flight deck of an aircraft. Authorisation may be performed using a camera and face recognition, password or pin code input on a touchscreen, a fingerprint scanner, or using a microphone and voice recognition. If the user is unauthorised, the system locks avionics and continues a current flight plan. In addition, the system can adjust a mode of the aircraft between a full authority mode, a reduced authority mode and a no authority mode. The no authority mode can include engaging an auto-land function. The system may further detect a duress input by techniques, such as facial detection, a duress phrase, a pin code, a button, a switch and the like.

US 2021/287560 A1 relates to an assist-to-land system, such as auto land and emergency land modes, that can be activated by a manual input, via a physical switch/button in the cockpit of an aircraft. In addition, the system can make an emergency land determination responsive to determining that the pilot is incapacitated, e.g., by obtaining an eyelid position or pupil dilation input.

It is an object of the present disclosure to provide an aircraft control system for improved flight safety of the aircraft and the passengers.

This object is solved by the present invention as defined in the independent claim.

Preferred embodiments are defined by the dependent claims.

According to an aspect to better understand the present disclosure, an aircraft comprises a cockpit, at least one crew rest compartment located outside of the cockpit, and an emergency system comprising an autopilot controller arranged in a cockpit of the aircraft and configured to automatically fly the aircraft including performing predefined manoeuvres, a surveillance system, and an emergency button arranged in a crew rest compartment outside of the cockpit and configured to send an emergency landing signal to the surveillance system and/or the autopilot controller when activated.

Thus, a crew member (pilot) and currently on standby or resting outside of the cockpit, which is common practice during long-haul flights, is capable of initiating an emergency landing procedure or manoeuvre, although not being physically in the cockpit. This allows the crew member outside of the cockpit to solve critical situations as if being in the cockpit, and valuable time is not lost, for example, until the crew member has left the crew rest compartment and reached the cockpit. This significantly increases safety of the aircraft and, hence, of the crew and passengers, as valuable time can be saved in critical situations.

Such emergency system further allows to reduce the number of "standby" or backup crew members providing economic benefits for the aircraft operator (e.g., an airline). As a mere example, during take-off and landing/approach two pilots are in the cockpit and fly (operate) the aircraft. However, during uncritical flight phases, such as climb, cruise, and initial decent, it is sufficient to have only one pilot in the cockpit.

It is to be understood that the surveillance system can be integrated into the autopilot controller. Thus, the aircraft can either be equipped with a conventional autopilot controller supplemented with the surveillance system, according to the present disclosure, or the autopilot controller is exchanged with an autopilot controller including the functionality of the surveillance system, according to the present disclosure. Such replacement of the autopilot controller includes updating a software/firmware executed on the autopilot controller.

In an implementation variant, the emergency system can further comprise a camera arranged in the cockpit and configured to capture an image of the cockpit, and a user interface device arranged in the crew rest compartment and configured to display the captured image from the camera. This allows the crew member in the crew rest compartment to see a live video stream of the cockpit and facilitates assessing the situation by the resting crew member.

As a mere example, the camera can be configured to capture an image of a section of the cockpit including a pilot seat. Thus, the resting crew member can assess whether the remaining (sole) pilot in the cockpit may not be able to handle the situation or may even be hampered to fly the aircraft. For instance, the pilot in the cockpit may be unconscious or may have a difficult health situation hindering the pilot from operating the aircraft properly. Of course, the resting crew member can go back to the cockpit without pressing the emergency button, for example, in less critical situations.

In another implementation variant, the display device can be further configured to display one or more alert messages indicated on a control panel in the cockpit. In other words, in case of alert messages being provided inside of the cockpit, such alert messages may be presented in the same or at least similar manner to the crew member in the crew rest compartment. Alternatively or additionally, the user interface can be configured to output a visual and/or audible alarm, in order to notify that an alert message is being displayed.

In yet another implementation variant, the surveillance system can be configured to monitor a physical condition and/or health of a pilot in the cockpit, to determine whether the pilot is hampered of operating the aircraft, and to send an alarm signal to the user interface device, if it is determined that the pilot is hampered based on the physical condition and/or health of the pilot. The alarm signal can be a visual and/or audible signal. Particularly, the alarm signal in the crew rest compartment can be a bright light, an alert message displayed, a sound, a noise, a vibration or the like, intended to wake up the resting crew member and/or directing the attention of the resting crew member to the user interface device.

Monitoring the physical condition and/or health of the pilot can be performed, for example, on the basis of the camera image. Health monitoring and fatigue recognition can be performed on image signals as well as audio surveillance of the cockpit. Thus, the surveillance system may analyse image data from the camera and/or audio data from a microphone or similar audio input device in the cockpit, to determine whether the (remaining) pilot in the cockpit is able to fly the aircraft. Such health monitoring and fatigue recognition can be based on a conventional pilot/driver monitoring system (for example, as they are also available for cars).

In an implementation variant, the emergency button can comprise a security measure, preferably an authentication means. As a mere example, the emergency button may be operated with a key that is only available to the crew member (pilot). Alternatively or additionally, the security measure may comprise entering a pin, password or other authentication credentials, such as a fingerprint or iris recognition, before the emergency button can be activated. This increases the overall security, so that the emergency button is not unintentionally triggered and the automated landing manoeuvre is not unintentionally initiated.

As a mere example, the crew rest compartment can be in a crown area of the aircraft or in a belly or cargo area, i.e. underneath the cabin floor. Both areas are usually reached through a small staircase or ladder, which can only be passed slowly.

It is to be understood that the emergency button and/or the user interface device may also be disposed in other aircraft sections, where flight personal operates or rests. As a mere example, well-trained flight attendants may be alerted via the user interface device and can assess the situation in the cockpit, and may even be authorised to activate the emergency button, and, hence, initiate the automated emergency landing manoeuvre of the aircraft.

The present disclosure is not restricted to the aspects and variants in the described form and order. Specifically, the description of aspects and variants is not to be understood as a specific limiting grouping of features. It is to be understood that the present disclosure also covers combinations of the aspects and variants. Thus, each variant or optional feature can be combined with any other aspect, variant, optional feature or even combinations thereof.

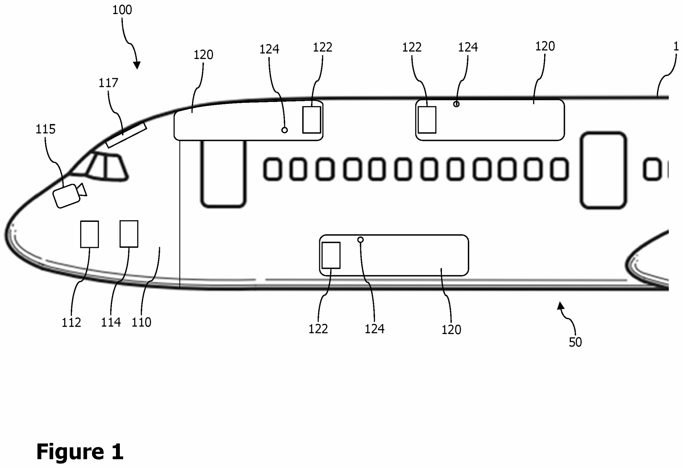

In the following, the present disclosure will further be described with reference to an exemplary implementation illustrated in the sole Figure 1 schematically illustrating an aircraft section having an emergency system.

In the following description, for purposes of explanation and not limitation, specific details are set forth in order to provide a thorough understanding of the present disclosure. It will be apparent to one skilled in the art that the present disclosure may be practiced in other implementations that depart from these specific details.

Figure 1 schematically illustrates an aircraft section 50 having an emergency system 100. Specifically, an aircraft 1 comprises an aircraft section 50 including a cockpit 110 and at least one crew rest compartment 120. Figure 1 exemplarily illustrates three crew rest compartments 120, two in a crown area, and one crew rest compartment 120 and a cargo area, i.e. beneath a cabin floor (not illustrated). Each crew rest compartment 120 is arranged outside of the cockpit 110, and it may take some time (e.g., a few minutes, such as one, two or even five minutes) for a crew member to leave the crew rest compartment 120 and reach the cockpit 110.

In the cockpit, an autopilot controller 112 is provided that is configured to automatically fly the aircraft 1. The autopilot controller 112 is further capable of performing predefined manoeuvres, such as following a particular (predefined and/or pre-programmed) flight route. This includes that the autopilot controller 112 operates the aircraft 1 to descent, climb, and cruise. Such autopilot controller 112 may be a conventional autopilot controller.

The emergency system 100 of the present disclosure additionally includes a surveillance system 114 and an emergency button 124. Specifically, the surveillance system 114 can be provided in or at the cockpit 110 and may be configured to communicate with the autopilot controller 112, particularly to send a control signal to the autopilot controller 112. The emergency button 124 is arranged in the crew rest compartment 120, i.e., outside of the cockpit 110. The emergency button 124 is arranged in such a manner that a resting crew member can activate the emergency button 124 before going to the cockpit 110. It is to be understood that the emergency button 124 may likewise be arranged at an entrance or close to the crew rest compartment 120 or at any other location outside of the cockpit 110.

In any case, the emergency button 124 is configured to send an emergency landing signal to the surveillance system 114. The surveillance system 114 may then be configured to initiate an emergency landing sequence (flight procedure) at the autopilot controller 112 (which emergency landing sequence may be conventionally installed in the autopilot controller 112 or may be installed when the aircraft 1 is retrofitted with the emergency system 100 of the present disclosure).

Alternatively or additionally, the emergency button 124 may directly send an emergency landing signal to the autopilot controller 112 (if the autopilot controller 112 is configured to receive and process such signal).

Thus, once the emergency button 124 is activated, an automatic emergency landing manoeuvre is initiated, so that the aircraft can, for example, begin to decent (e.g., under control of the autopilot controller 112 or other emergency flight means, e.g., TCAS-alert based devices). This saves valuable time in case of an emergency, if the resting crew member is the sole member handling a critical situation, but is currently not in the cockpit 110.

The emergency system 100 can further comprise a camera 115 arranged in the cockpit 110 and configured to capture an image of the cockpit. As illustrated in Figure 1, the camera 115 can capture an image of a section of the cockpit including a pilot seat.

The surveillance system 114 may be configured to analyse the captured image from the camera 115, in order to monitor a physical condition and/or health situation of a member (pilot) in the cockpit 110. The surveillance system 114 may further be configured to determine whether the crew member is hampered of operating the aircraft 1, i.e., is hindered or unable to control the aircraft 1, and if so, send an alarm signal to the crew rest compartment 120. Specifically, the surveillance system 114 can send such alarm signal to a user interface device 122 arranged in the crew rest compartment 120 (or close thereto).

Furthermore, the user interface device 122 can be configured to display the captured image from the camera 115. This allows the resting crew member to have a real-time view into the cockpit 110, although currently being outside of the cockpit 110. Thus, the crew member can assess the situation and, if necessary, press the emergency button 124.

It is to be understood that the emergency button 124 can be a physical button (hard key) that can be pressed to activate the emergency landing manoeuvre. Alternatively or additionally, such emergency button 124 can be provided on the user interface device 122, for example, in form of a so-called soft key (displayed button). The user interface device 122 may be equipped with one or more physical buttons that can be related to such soft keys and/or can be configured as a touchscreen (a display screen including a touch input capability).

In case of a touch screen forming the user interface device 122, authentication means can be easily, including displaying of input fields for user credentials, such as username and password, a pin or the like. Moreover, a finger print recognition or iris recognition can be provided at or in the user interface device 122, in order to authenticate the crew member when the emergency button 124 is activated/triggered.

In case of a hard key, security measures, such as authentication means can also be provided. One measure would be that the emergency button 124 can only be activated when using a key.

It is to be understood that combinations of hard key and soft key inputs are required to activate the emergency button 124.

A further optional feature of the surveillance system 114 is an input means that can be activated by the (remaining) crew member in the cockpit 110. In this case, the surveillance system 114 sends the alert message to the user interface device 122 and/or triggers an alarm signal in or near the crew rest compartment 120. As a mere example, in case of the crew member in the cockpit 100 can feeling not well, and alert to the other crew member in the crew rest compartment 120 can be initiated.

It is believed that the advantages of the technique presented herein will be fully understood from the foregoing description, and it will be apparent that various changes may be made in the form, constructions and arrangement of the exemplary aspects thereof without departing from the scope of the invention, as defined by the appended claims, or without sacrificing all of its advantageous effects. Because the technique presented herein can be varied in many ways, it will be recognized that the invention should be limited only by the scope of the claims that follow.

## Claims

1. An aircraft (1), comprising:
a cockpit (110);
at least one crew rest compartment (120) located outside of the cockpit (110); and
an emergency system (100),
wherein the emergency system (100) comprises:
an autopilot controller (112) arranged in the cockpit (110) and configured to automatically fly the aircraft including performing predefined manoeuvres;
a surveillance system (114); and
an emergency button (124) arranged in the crew rest compartment (120) outside of the cockpit (110) and configured to send an emergency landing signal to the surveillance system (114) and/or the autopilot controller (112) when activated.

2. The aircraft of claim 1, further comprising:
a camera (115) arranged in the cockpit (110) and configured to capture an image of the cockpit, preferably an image of a section of the cockpit including a pilot seat; and
a user interface device (122) arranged in the crew rest compartment (120) and configured to display the captured image from the camera (115).

3. The aircraft of claim 2, wherein the user interface device (122) is further configured to display one or more alert messages indicated on a control panel (117) in the cockpit (110), and/or
wherein the surveillance system (114) is configured to monitor a physical condition and/or health of a pilot in the cockpit (110), to determine whether the pilot is hampered of operating the aircraft, and to send an alarm signal to the user interface device (122), if the physical condition and/or health of the pilot is determined to be hampered.

4. The aircraft of one of claims 1 to 3, wherein the emergency button (124) comprises a security measure, preferably an authentication means.

## Patentansprüche

1. Flugzeug (1), umfassend: ein Cockpit (110); mindestens ein außerhalb des Cockpits (110) angeordnetes Besatzungsruhabteil (120); und ein Notsystem (100), wobei das Notsystem (100) umfasst: eine Autopilot-Steuerung (112), die im Cockpit (110) angeordnet und so konfiguriert ist, dass sie das Flugzeug automatisch fliegt, einschließlich des Durchführens vordefinierter Manöver; ein Überwachungssystem (114); und einen Notknopf (124), der im Besatzungsruhabteil (120) außerhalb des Cockpits (110) angeordnet und so konfiguriert ist, dass er bei Aktivierung ein Notlandesignal an das Überwachungssystem (114) und/oder die Autopilot-Steuerung (112) sendet.

2. Flugzeug nach Anspruch 1, ferner umfassend: eine Kamera (115), die im Cockpit (110) angeordnet und so konfiguriert ist, dass sie ein Bild des Cockpits erfasst, vorzugsweise ein Bild eines Abschnitts des Cockpits, der einen Pilotensitz einschließt; und eine Benutzerschnittstellenvorrichtung (122), die im Besatzungsruhabteil (120) angeordnet und so konfiguriert ist, dass sie das erfasste Bild von der Kamera (115) anzeigt.

3. Flugzeug nach Anspruch 2, wobei die Benutzerschnittstellenvorrichtung (122) ferner so konfiguriert ist, dass sie eine oder mehrere Warnmeldungen anzeigt, die auf einem Bedienfeld (117) im Cockpit (110) angegeben werden, und/oder wobei das Überwachungssystem (114) so konfiguriert ist, dass es einen physischen Zustand und/oder die Gesundheit eines Piloten im Cockpit (110) überwacht, um zu bestimmen, ob der Pilot an der Bedienung des Flugzeugs gehindert ist, und um ein Alarmsignal an die Benutzerschnittstellenvorrichtung (122) zu senden, wenn bestimmt wird, dass der physische Zustand und/oder die Gesundheit des Piloten beeinträchtigt ist.

4. Flugzeug nach einem der Ansprüche 1 bis 3, wobei der Notknopf (124) eine Sicherheitsmaßnahme, vorzugsweise ein Authentifizierungsmittel, umfasst.

## Revendications

1. Aéronef (1), comprenant : un poste de pilotage (110) ; au moins un compartiment de repos d'équipage (120) situé à l'extérieur du poste de pilotage (110) ; et un système d'urgence (100), dans lequel le système d'urgence (100) comprend : un contrôleur de pilote automatique (112) agencé dans le poste de pilotage (110) et configuré pour faire voler l'aéronef de manière automatique, y compris pour effectuer des manœuvres prédéfinies ; un système de surveillance (114) ; et un bouton d'urgence (124) agencé dans le compartiment de repos d'équipage (120) à l'extérieur du poste de pilotage (110) et configuré pour envoyer un signal d'atterrissage d'urgence au système de surveillance (114) et/ou au contrôleur de pilote automatique (112) lorsqu'il est activé.

2. Aéronef selon la revendication 1, comprenant en outre : une caméra (115) agencée dans le poste de pilotage (110) et configurée pour capturer une image du poste de pilotage, de préférence une image d'une section du poste de pilotage incluant un siège de pilote ; et un dispositif d'interface utilisateur (122) agencé dans le compartiment de repos d'équipage (120) et configuré pour afficher l'image capturée par la caméra (115).

3. Aéronef selon la revendication 2, dans lequel le dispositif d'interface utilisateur (122) est en outre configuré pour afficher un ou plusieurs messages d'alerte indiqués sur un panneau de commande (117) dans le poste de pilotage (110), et/ou dans lequel le système de surveillance (114) est configuré pour surveiller une condition physique et/ou la santé d'un pilote dans le poste de pilotage (110), pour déterminer si le pilote est entravé dans l'exploitation de l'aéronef, et pour envoyer un signal d'alarme au dispositif d'interface utilisateur (122), s'il est déterminé que la condition physique et/ou la santé du pilote est entravée.

4. Aéronef selon l'une des revendications 1 à 3, dans lequel le bouton d'urgence (124) comprend une mesure de sécurité, de préférence un moyen d'authentification.
